# EUROPÄISCHE PATENTSCHRIFT

(11) **EP 1 242 301 B1**
(45) Veröffentlichungstag und Bekanntmachung des Hinweises auf die Patenterteilung: **07.09.2005**
(21) Anmeldenummer: 00989955.0
(22) Anmeldetag: 06.12.2000
(51) Int. Cl.: B65H 75/44, A47L 9/26

(54) **KABELAUFWICKELVORRICHTUNG**
CABLE WINDING DEVICE
ENROULEUR DE CABLE

(30) Priorität: 17.12.1999 DE 19961115
(43) Veröffentlichungstag der Anmeldung: 25.09.2002
(73) Patentinhaber: BSH Bosch und Siemens Hausgeräte GmbH, 81739 München (DE)
(72) Erfinder: SCHLERETH, Andreas, 97616 Bad Neustadt (DE); FREUND, Elmar, 97618 Rödelmaier (DE); JESSENBERGER, Martin, 97638 Eussenhausen (DE); KESS, Herbert, 97616 Bad Neustadt (DE); SEITH, Thomas, 97616 Bad Neustadt (DE); STERZINGER, Wilma, 97618 Wülfershausen (DE)
(86) Internationale Anmeldenummer: PCT/EP2000/012296
(87) Internationale Veröffentlichungsnummer: WO 2001/044093

(56) Entgegenhaltungen:
- DE-A- 3 316 977
- DE-A- 3 721 044
- DE-U- 8 520 923
- PATENT ABSTRACTS OF JAPAN vol. 018, no. 030 (C-1153), 17. Januar 1994 (1994-01-17) -& JP 05 261044 A (MATSUSHITA ELECTRIC IND CO LTD), 12. Oktober 1993 (1993-10-12)
- "ELECTRICAL-CORD WINDER WITH REMOTE CONTROL" RESEARCH DISCLOSURE,KENNETH MASON PUBLICATIONS, HAMPSHIRE,GB, Nr. 400, 1. August 1997 (1997-08-01), Seite 495 XP000726620 ISSN: 0374-4353
- PATENT ABSTRACTS OF JAPAN vol. 1995, no. 09, 31. Oktober 1995 (1995-10-31) -& JP 07 155277 A (SHARP CORP), 20. Juni 1995 (1995-06-20)
- PATENT ABSTRACTS OF JAPAN vol. 018, no. 198 (C-1187), 7. April 1994 (1994-04-07) -& JP 06 000153 A (MATSUSHITA ELECTRIC IND CO LTD), 11. Januar 1994 (1994-01-11)

## Beschreibung

Die Erfindung betrifft eine Kabelaufwickelvorrichtung für ein elektrisches Gerät, insbesondere für einen Staubsauger, welche Vorrichtung eine an einem feststehenden Tragteil drehbar angeordnete Kabeltrommel aufweist, die mit einem Sperrelement versehen ist, wobei nach dessen Lösen mittels einer elektrisch auslösbaren Entriegelungsvorrichtung welche eine Feder aufweist, welche mittels eines Elektromagneten spannbar ist und durch den Elektromagneten in ihrer gespannten Stellung gehalten ist, die Kabeltrommel durch eine Antriebsvorrichtung in Aufwickelrichtung antreibbar ist.

Eine solche Kabelaufwickelvorrichtung ist durch die DE-A-3 721 044 bekannt. Bei der durch das DE-U-8 580 923 bekannten Kabelaufwickelvorrichtung ist als Sperrelement an der Kabeltrommel eine Kulissenscheibe vorgesehen, die mit einem Sperrstift zusammenwirkt. Die Kulissenscheibe ist derart gestaltet, daß der Sperrstift nach dem Abziehen des Kabels von der Kabeltrommel bei der dann durch die Antriebsvorrichtung der Kabeltrommel bewirkten Aufwickelbewegung in der Kontur der Kulissenscheibe verhakt und somit eine weitere Drehbewegung in Aufwickelrichtung verhindert. Ein Lösen dieser Sperrung in Aufwickelrichtung wird durch eine erneute Zugbewegung am Kabel erreicht. Infolge der hierdurch bewirkten geringfügigen Drehbewegung der Kabeltrommel in Abwickelrichtung wird die Verhakung des Sperrstiftes mit der Kulissenscheibe aufgehoben, so daß die Kabeltrommel nach der Beendigung der Zugbewegung durch die Antriebsvorrichtung in Aufwickelrichtung angetrieben werden kann. Der Aufwickelvorgang muß also durch eine erneute Zugbewegung an dem Kabel eingeleitet werden.

Bei der durch die DE-A-33 16 977 bekannten Kabelaufwickelvorrichtung ist an einem Nabenansatz der Kabeltrommel eine Schlingfeder angeordnet, die im entspannten Zustand fest am Außenumfang des Nabenansatzes anliegt. Mit ihrem einen Ende ist die Schlingfeder an einem feststehenden Gehäuseteil der Kabelaufwickelvorrichtung festgelegt. Das andere Ende der Schlingfeder ist mit einem Löseelement gekoppelt. Über das Löseelement, das von der Außenseite eines Staubsaugergehäuses mittels einer Lösetaste betätigbar ist, kann das andere Ende der Schlingfeder im Sinne einer Durchmesservergrösserung verschwenkt werden. Infolge der Durchmesservergrößerung wird die Bremswirkung der Schlingfeder aufgehoben und die Antriebsvorrichtung kann die Kabeltrommel in Aufwickelrichtung antreiben. Die Lösetaste muß während des gesamten Aufwickelvorganges gedrückt gehalten werden, da bei einem Loslassen derselben sofort wieder die Bremswirkung der Schlingfeder eintritt.

Der Erfindung liegt die Aufgabe zugrunde, eine Kabelaufwickelvorrichtung zu schaffen, bei der das Aufwickeln des Kabels ohne eine gesonderte, vom Benutzer des Gerätes durchzuführende Betätigungsaktion erfolgen kann.

Die Lösung der gestellten Aufgabe gelingt nach der Erfindung durch die Merkmale des Patentanspruchs 1. Die Kabeltrommel ist mit einer Kulissenbremse versehen, deren Sperrelement durch eine geringfügige Drehbewegung der Kabeltrommel in Abwickelrichtung lösbar ist und die elektrisch auslösbare Entriegelungsvorrichtung zum Auslösen des Sperrelements weist eine mit einem Magnetkern des Elektromagneten verbundene Zahnstange auf, deren Zähne mit einem Zwischenzahnrad in Eingriff stehen, welches seinerseits mit einem an der Kabeltrommel vorgesehenen Zahnkranz in Antriebsverbindung steht, um die Kabeltrommel um die geringfügige Drehbewegung in Abwickelrichtung anzutreiben.

Dadurch, daß die Entriegelungsvorrichtung eine Feder aufweist, welche mittels des Elektromagneten spannbar ist und durch den Elektromagneten in ihrer gespannten Stellung gehalten ist, wird beim Abschalten des Gerätes oder beim Ziehen des Steckers der Aufwickelvorgang ohne ein weiteres Zutun eingeleitet, da bei Wegfall der Spannung der Elektromagnet seine Haltekraft verliert und die zuvor im gespannten Zustand gehaltene Feder nunmehr das Lösen des Sperrelementes vollzieht.

Eine konstruktiv einfache Ausgestaltung ergibt sich dadurch, daß der Elektromagnet einen linearbeweglich angeordneten Magnetkern besitzt, durch dessen Anzugsbewgung die als Zug- oder Druckfeder ausgebildete Feder spannbar ist und daß mit dem Magnetkern das Zwischenzahnrad gekoppelt ist, welches auf das Sperrelement einwirkt. Die nach dem Abschalten des Elektromagneten beim Entspannen der Zug- oder Druckfeder erfolgende Verstellbewegung wird zum Lösen des Sperrelementes genutzt. Somit braucht vom Benutzer des Gerätes keine gesonderte Entriegelung des Sperrelementes vorgenommen zu werden.

Das Zwischenzahnrad weist in Aufwickelrichtung gegenüber der Kabeltrommel einen Freilauf auf.

Anhand eines in der Zeichnung dargestellten Ausführungsbeispieles wird die Erfindung nachfolgend noch näher erläutert. Es zeigt:

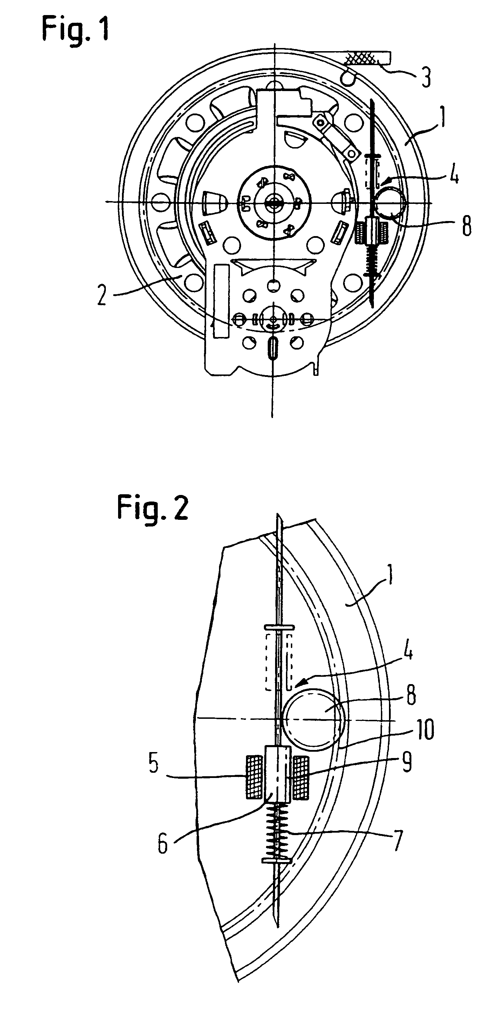

- Fig. 1: eine Kabelaufwickelvorrichtung in Seitenansicht, mit einer angebauten Entriegelungsvorrichtung zum Lösen der Kabeltrommelbremse und
- Fig. 2: die die Kabeltrommelbremse lösende Entriegelungsvorrichtung im Detail.

Mit 1 ist eine an einem feststehenden Teil 2 drehbar gelagerte Kabeltrommel bezeichnet, auf der ein Kabel 3 auf- und abwickelbar ist. Die Kabeltrommel 1 ist mit einer in der Zeichnung nicht dargestellten Kulissenbremse versehen. Eine derartige Kulissenbremse ist durch das DE-U-85 20 923 bekannt. Entsprechend der Funktionsweise einer solchen Kulissenbremse wird durch geringfügiges Drehen der Kabeltrommel in Abwickelrichtung die Bremswirkung aufgehoben, so daß anschließend die Kabeltrommel 1 durch die vorgesehene Antriebsvorrichtung in Aufwickelrichtung angetrieben und das Kabel aufgewickelt werden kann. Das zum Aufheben der Bremswirkung notwendige Drehen der Kabeltrommel 1 erfolgt durch eine an dem feststehenden Teil 2 angebaute Entriegelungsvorrichtung 4.

Diese Entriegelungsvorrichtung 4 weist einen aus einer elektrisch erregbaren Magnetspule 5 und einem Magnetkern 6 bestehenden Elektromagneten auf. Mit dem linear verstellbaren Magnetkern 6 ist eine Druckfeder 7 gekoppelt, die beim Einschalten des Elektromagneten durch die Anzugsbewegung des Magnetkernes 6 zusammengedrückt, also gespannt wird, und während der Einschaltdauer des Elektromagneten in der gespannten Lage gehalten wird. Anstelle einer Druckfeder kann auch eine in entsprechender Weise mit dem Magnetkern 6 gekoppelte Zugfeder vorgesehen werden.

Zur Entriegelungsvorrichtung 4 gehört ferner ein Zwischenzahnrad 8. Dieses ist über eine mit dem Magnetkern 6 gekoppelte Zahnstange 9 antreibbar. Im Ausführungsbeispiel ist die Zahnstange 9 direkt am Magnetkern 6 ausgebildet. Ferner steht das Zwischenzahnrad 8 mit einem an der Kabeltrommel 1 angeordneten Zahnkranz 10 in Antriebsverbindung. Diese Antriebsverbindung ist so gestaltet, daß die Kabeltrommel 1 über das Zwischenzahnrad 8 nur in Abwickelrichtung antreibbar ist, in Aufwickelrichtung der Kabeltrommel 1 dagegen ein Freilauf zwischen der Kabeltrommel 1 und dem Zwischenzahnrad 8 besteht.

Die Entriegelungsvorrichtung 4 arbeitet wie folgt. Beim Anlegen einer elektrischen Spannung an die Magnetspule 5 wird der Magnetkern 6 angezogen und spannt dabei die Druckfeder 7. Das Anlegen der Spannung kann synchron zum Einschalten des elektrischen Gerätes, dem die Kabelaufwickelvorrichtung zugeordnet ist, oder durch einfaches Einstecken des Netzsteckers erfolgen. Beim Arbeiten mit dem Gerät kann das auf der Kabeltrommel 1 aufgewickelte Kabel 3 den Bedürfnissen entsprechend von der Kabeltrommel 1 abgezogen werden. Durch die an der Kabeltrommel 1 vorgesehene Kulissenbremse wird ein sofortiges Wiederaufwickeln des Kabels 3 verhindert. Wird am Ende eines Arbeitsvorganges das Gerät abgeschaltet oder der Netzstecker gezogen, dann wird gleichzeitig auch der Elektromagnet spannungslos und damit die von dem Magnetkern 6 auf die Druckfeder 7 ausgeübte Haltekraft aufgehoben. Die Druckfeder 7 schiebt nunmehr den Magnetkern 6 aus der Magnetspule 5 heraus. Dabei kommt die Zahnstange 9 mit dem Zwischenzahnrad 8 in Eingriff. Hierdurch wird das Zwischenzahnrad 8 im Uhrzeigersinn angetrieben. Diese Antriebsbewegung wird von dem Zwischenzahnrad 8 auf den Zahnkranz 10 der Kabeltrommel 1 übertragen, die somit geringfügig im Uhrzeigersinn verdreht wird. Die Richtung dieser Drehbewegung entspricht somit der beim Abziehen des Kabels 3 von der Kabeltrommel 1 auftretenden Drehrichtung. Wie bereits weiter oben erläutert, wird durch eine geringfügige Drehbewegung der Kabeltrommel 1 in Abwickelrichtung eine Aufhebung der Bremsstellung der Kulissenbremse erreicht. Somit wird also durch die beim Abschalten des Elektromagneten freigegebene Druckfeder 7 die Bremsstellung der Kulissenbremse aufgehoben und damit der Aufwickelvorgang eingeleitet. Der Aufwickelvorgang wird durch die an der Kabelaufwickelvorrichtung vorgesehene Antriebsvorrichtung (z.B. ein Federmotor) bewirkt.

Beim Wiedereinschalten des Elektromagneten wird der Magnetkern 6 durch das Magnetfeld der Magnetspule 5 angezogen und spannt wieder die Druckfeder 7. Auch bei dieser Verstellbewegung des Magnetkernes 6 kommt die Zahnstange 9 mit dem Zwischenzahnrad 8 in Eingriff. Dabei wird das Zwischenzahnrad 8 entgegen dem Uhrzeigersinn verdreht. Da bei dieser Drehrichtung ein Freilauf zwischen dem Zwischenzahnrad 8 und dem Zahnkranz 10 der Kabeltrommel 1 besteht, hat diese Drehbewegung keinerlei Einfluß auf die Kabeltrommel 1. Erst bei der, beim Abschalten des Elektromagneten von der Druckfeder 7 wieder ausgeführten Verstellbewegung wird die Kabeltrommel 1 wiederum geringfügig in Abwickelrichtung verdreht und dabei wie schon erläutert die Bremswirkung der Kulissenbremse aufgehoben.

Die beschriebene Entriegelungsvorrichtung 4 eignet sich auch für das Auslösen eines Aufwickelvorganges während des Betriebes des Gerätes. Hierzu kann beispielsweise der Elektromagnet gezielt spannungslos geschaltet werden, wodurch die Bremswirkung der jeweiligen Kabeltrommelbremse aufgehoben und das Kabel 3 aufgewickelt wird. Durch erneutes Einschalten des Elektromagneten wird dann wieder die Kabeltrommelbremse aktiviert und der Aufwickelvorgang abgebrochen.

## Patentansprüche

1. Kabelaufwickelvorrichtung für ein elektrisches Gerät, insbesondere für einen Staubsauger, mit einer an einem feststehenden Tragteil (2) drehbar angeordneten Kabeltrommel (1), die mit einem Sperrelement versehen ist, wobei nach dessen Lösen mittels einer elektrisch auslösbaren Entriegelungsvorrichtung (4), welche eine Feder (7) aufweist, welche mittels eines Elektromagneten (5;6) spannbar ist und durch den Elektromagneten (5;6) in ihrer gespannten Stellung gehalten ist, die Kabeltrommel (1) durch eine Antriebsvorrichtung in Aufwickelrichtung antreibbar ist, **dadurch gekennzeichnet, dass** die Kabeltrommel (1) mit einer Kulissenbremse versehen ist, deren Sperrelement durch eine geringfügige Drehbewegung der Kabeltrommel in Abwickelrichtung lösbar ist und die elektrisch auslösbare Entriegelungsvorrichtung (4) zum Auslösen des Sperrelements eine mit einem Magnetkern (6) des Elektromagneten (5; 6) verbundene Zahnstange (9) aufweist, deren Zähne mit einem Zwischenzahnrad (8) in Eingriff stehen, welches seinerseits mit einem an der Kabeltrommel (1) vorgesehenen Zahnkranz (10) in Antriebsverbindung steht, um die Kabeltrommel (1) um die geringfügige Drehbewegung in Abwickelrichtung anzutreiben.

2. Kabelaufwickelvorrichtung nach Anspruch 1, **dadurch gekennzeichnet, dass** der Elektromagnet (5;6) einen linearbeweglich angeordneten Magnetkern (6) besitzt, durch dessen Anzugsbewegung die als Zug- oder Druckfeder ausgebildete Feder (7) spannbar ist und daß mit dem Magnetkern (6) das Zwischenzahnrad (8) gekoppelt ist, welches auf das Sperrelement einwirkt.

3. Kabelaufwickelvorrichtung nach Anspruch 1 oder 2, **dadurch gekennzeichnet, dass** das Zwischenzahnrad (8) in Aufwickelrichtung gegenüber der Kabeltrommel (1) einen Freilauf aufweist.

4. Kabelaufwickelvorrichtung nach Anspruch 1, **dadurch gekennzeichnet, dass** Mittel vorgesehen sind, durch die das Sperrelement durch Abschalten der elektrischen Spannung an dem Elektromagneten (5;6) auslösbar ist.

5. Kabelaufwickelvorrichtung nach Anspruch 4, **dadurch gekennzeichnet, dass** Mittel zum Auslösen eines Aufwickelvorganges während des Betriebs des Gerätes vorgesehen sind, durch die der Elektromagnet (5;6) während des Betriebes des Gerätes spannungslos schaltbar ist.

6. Kabelaufwickelvorrichtung nach Anspruch 5, **dadurch gekennzeichnet, dass** die Mittel so ausgebildet sind, dass durch erneutes Anlegen einer elektrischen Spannung an dem Elektromagneten (5;6) der Aufwickelvorgang abgebrochen wird.

## Claims

1. Cable winding device for an electrical appliance, particularly for a vacuum cleaner, with a cable drum (1), which is rotatably arranged at a stationary support part (2) and which is provided with a blocking element, wherein the cable drum (1) is drivable in winding-up direction by a drive device after release of the blocking element by means of an unlocking device which can be electrically triggered and comprises a spring (7), which can be stressed by means of an electromagnetic (5; 6) and is kept in its stressed setting by the electromagnet (5; 6), **characterised in that** the cable drum (1) is provided with a gate-type brake, the blocking element of which is releasable by a slight rotational movement of the cable drum in unwinding direction and the electrically triggerable unlocking device (4) for release of the blocking element comprises a rack (9), which is connected with a magnet core (6) of the electromagnet (5; 6) and the teeth of which are disposed in engagement with an intermediate gearwheel (8), which in turn is disposed in drive connection with a rim gear (10), which is provided at the cable drum (1), so as to drive the cable drum (1) through the slight rotational movement in unwinding direction.

2. Cable winding device according to claim 1, **characterised in that** the electromagnet (5; 6) comprises a magnet core (6) which is arranged to be linearly movable and through the attraction movement of which the spring (7), which is constructed as a tension spring or compression spring, can be stressed and that the intermediate gearwheel (8) is coupled with the magnet core (6) and acts on the blocking element.

3. Cable winding device according to claim 1 or 2, **characterised in that** the intermediate gearwheel (8) has freewheeling relative to the cable drum (1) in winding-up direction.

4. Cable winding device according to claim 1, **characterised in that** means are provided by which the blocking element can be triggered by switching off the electrical voltage at the electromagnet (5; 6).

5. Cable winding device according to claim 4, **characterised in that** means for triggering a winding-up process during operation of the appliance are provided, by which the electromagnet (5; 6) is switchable to be free of voltage during operation of the appliance.

6. Cable winding device according to claim 5, **characterised in that** the means are so constructed that the winding-up process is terminated by renewed application of an electrical voltage to the electromagnet (5; 6).

## Revendications

1. Enrouleur de câble pour un appareil électrique, notamment pour un aspirateur, lequel enrouleur comporte un tambour de câble (1) qui est monté de manière à pouvoir tourner sur une partie porteuse fixe (2) et qui est muni d'un élément de verrouillage, le tambour de câble (1) pouvant être entraîné dans le sens d'enroulement par un dispositif d'entraînement après le déblocage de l'élément de verrouillage au moyen d'un dispositif de déverrouillage (4) déclenchable électriquement et comportant un ressort (7) qui peut être contraint au moyen d'un électro-aimant (5 ; 6) et qui peut être maintenu dans sa position contrainte par l'électro-aimant (5 ; 6), **caractérisé en ce que** le tambour de câble (1) est muni d'un frein à coulisse dont l'élément de verrouillage peut être débloqué par une légère rotation du tambour de câble dans le sens de déroulement et le dispositif de déverrouillage (4) déclenchable électriquement et destiné au déclenchement de l'élément de verrouillage comporte une crémaillère (9) qui est reliée à un noyau magnétique (6) de l'électro-aimant (5 ; 6) et dont les dents s'engrènent dans une roue dentée intermédiaire (8) qui est pour sa part en liaison d'entraînement avec une couronne dentée (10) prévue sur le tambour de câble (1) pour entraîner le tambour de câble (1) suivant la légère rotation dans le sens de déroulement.

2. Enrouleur de câble selon la revendication 1, **caractérisé en ce que** l'électro-aimant (5 ; 6) comporte un noyau magnétique (6) qui est monté avec une certaine mobilité linéaire et dont le mouvement d'attraction permet de contraindre le ressort (7) conçu comme un ressort de traction ou de pression et **en ce que** la roue dentée intermédiaire (8) qui agit sur l'élément de verrouillage est couplée au noyau magnétique (6).

3. Enrouleur de câble selon la revendication 1 ou 2, **caractérisé en ce que** la roue dentée intermédiaire (8) comporte une course libre dans le sens d'enroulement par rapport au tambour de câble (1).

4. Enrouleur de câble selon la revendication 1, **caractérisé en ce qu'**il est prévu des moyens par lesquels l'élément de verrouillage peut être débloqué par la coupure de la tension électrique à l'électro-aimant (5 ; 6).

5. Enrouleur de câble selon la revendication 4, **caractérisé en ce qu'**il est prévu pour le déclenchement d'une opération d'enroulement pendant le fonctionnement de l'appareil des moyens par lesquels l'électro-aimant (5 ; 6) peut être mis hors tension pendant le fonctionnement de l'appareil.

6. Enrouleur de câble selon la revendication 5, **caractérisé en ce que** les moyens sont conçus de telle sorte qu'une nouvelle application d'une tension électrique à l'électro-aimant (5 ; 6) interrompt l'opération d'enroulement.
